# EUROPEAN PATENT APPLICATION

(11) **EP 4 765 825 A1**
(43) Date of publication of application: **24.06.2026**
(21) Application number: 24853870.4
(22) Date of filing: 15.08.2024
(51) Int. Cl.: H04N 21/2187

(54) **LIVE-STREAMING RESERVATION METHOD AND APPARATUS, AND DEVICE AND STORAGE MEDIUM**

(30) Priority: 15.08.2023 CN 202311030339
(71) Applicant: Beijing Zitiao Network Technology Co., Ltd., Beijing 100190 (CN); BEIJING YOUZHUJU NETWORK TECHNOLOGY CO. LTD., Beijing 101299 (CN)
(72) Inventor: XUAN, Hui, Beijing 100028 (CN); QIAN, Dongjun, Beijing 100028 (CN); CHENG, Hu, Beijing 100028 (CN); SU, Kai, Beijing 100028 (CN)
(74) Representative: Grünecker Patent- und Rechtsanwälte PartG mbB
(86) International application number: PCT/CN2024/112557
(87) International publication number: WO 2025/036464

(57) **Abstract**

Embodiments of the present disclosure provide a method, an apparatus, a device and a storage medium for live streaming reservation. **In** the method, a viewing interface of a work of a first user is presented. In response to the work being determined to be associated with a live streaming scenario, a reservation entry associated with a live streaming event of the first user is presented in the viewing interface. In response to a selection of the reservation entry by a second user, reminder information about the live streaming event is sent to the second user at a time instance associated with the live streaming event. Therefore, the promotion effect of the live streaming by the streamer user may be improved, the watching rate of the live streaming by the audience user may be improved, and the live streaming interaction experience of the streamer user and the audience user may be improved.

## Description

This application claims the benefit of Chinese Patent Application No. 202311030339.1, filed on August 15, 2023, entitled "Method, Apparatus, Device and Storage Medium for Live Streaming Reservation," the entire content of which is incorporated herein by reference.

### FIELD

Example embodiments of the present disclosure generally relate to the field of computers, and in particular, to a method, an apparatus, a device, and a computer-readable storage medium for live streaming reservation.

### BACKGROUND

With the development of computer technologies, more and more applications can also provide live streaming content. Various types of live streaming can provide people with content in multiple aspects such as information, education, life and entertainment. In order to facilitate the audience user obtaining the live streaming prompt information of the live streaming room of interest to the user in time when the live streaming starts, a reservation control of the live streaming room is usually provided. It can be determined that the audience user is interested in the live streaming room in response to the selection operation of the audience user on the reservation control, and then the live streaming prompt information is sent to the audience user when the live streaming room starts to prompt the user to enter the live streaming room.

### SUMMARY

In a first aspect of the present disclosure, a method for live streaming reservation is provided. The method includes: presenting a viewing interface of a work of a first user; presenting, in response to the work being determined to be associated with a live streaming scenario, a reservation entry associated with a live streaming event of the first user in the viewing interface; and sending, in response to a selection of the reservation entry by a second user, reminder information about the live streaming event to the second user at a time instance associated with the live streaming event.

In a second aspect of the present disclosure, an apparatus for live streaming reservation is provided. The apparatus includes: an interface presentation module configured to present a viewing interface of a work of a first user; an entry presentation module configured to present, in response to the work being determined to be associated with a live streaming scenario, a reservation entry associated with a live streaming event of the first user in the viewing interface; and an information sending module configured to, sending, in response to a selection of the reservation entry by a second user, reminder information about the live streaming event to the second user at a time instance associated with the live streaming event.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium stores a computer program, and the computer program is executable by the processor to implement the method of the first aspect.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure can be implemented;
FIG. 2 illustrates a flowchart of a process for live streaming reservation according to some embodiments of the present disclosure;
FIGS. 3A-3D illustrate schematic diagrams of viewing interfaces according to some embodiments of the present disclosure;
FIG. 4 illustrates a schematic diagram of a process of determining whether a work is associated with a live streaming scenario according to some embodiments of the present disclosure;
FIG. 5 illustrates a schematic structural block diagram of an apparatus for live streaming reservation according to some embodiments of the present disclosure; and
FIG. 6 illustrates a block diagram of a device capable of implementing various embodiments of the present disclosure.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not restrictive. Various embodiments are described throughout, and any type of embodiment may be included in any section/subsection. Furthermore, the embodiments described in any section/subsection may be combined in any manner with the same section/subsection and/or any other embodiment described in different sections/subsections.

In the description of the embodiments of the present disclosure, the terms "including" and the like should be understood as open-ended inclusion, i.e., "including but not limited to". The term "based on" should be understood as "based at least in part on". The term "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

Embodiments of the present disclosure may involve data of a user, acquisition and/or use of data, and the like. These aspects all follow the corresponding laws and regulations and related provisions. In the embodiments of the present disclosure, all data collection, acquisition, processing, processing, forwarding, use, etc. are carried out on the premise that the user knows and confirms. Accordingly, when implementing the embodiments of the present disclosure, the type, the usage scope, the usage scenario, etc. of the possibly involved data or information should be informed to the user and obtain the authorization of the user in an appropriate manner according to the relevant laws and regulations. The specific notification and/or authorization manner may vary according to actual situations and application scenarios, and the scope of the present disclosure is not limited in this respect.

The solutions in the present specification and the embodiments, if involving personal information processing, will all be processed on the premise of having a legal basis (for example, obtaining consent of a personal information subject, or necessary for performing a contract, etc.), and will only be processed within a specified or agreed scope. The user rejects personal information other than necessary information required by the basic function and does not affect the user's use of the basic function.

As briefly mentioned above, in order to facilitate the audience user to obtain the live streaming prompt information of the live streaming room of interest to the user in time when the live streaming starts, the reservation control of the live streaming room is usually provided. It can be determined that the audience user is interested in the live streaming room in response to the selection operation of the audience user on the reservation control, and then the live streaming prompt information is sent to the audience user when the live streaming room starts to prompt the user to enter the live streaming room.

Traditionally, a reservation sticker may be presented in a specified work published by a streamer user in response to a configuration of the streamer user. When browsing the specified work of the streamer user, the audience user may reserve the live streaming of the streamer user by clicking the reservation control presented in the reservation sticker. However, such a reservation sticker needs to be configured by the streamer user after determining the live streaming time. That is, when the streamer user is not sure about the live streaming time, the streamer user cannot present such a reservation sticker in the work, and the audience user cannot reserve the live streaming. This affects the promotion effect of the live streaming by the streamer user, the viewing rate of the live streaming by the audience user, and also the live interaction experience between the streamer user and the audience user.

Therefore, embodiments of the present disclosure propose a solution for live streaming reservation. According to various embodiments of the present disclosure, a viewing interface of a work of a first user is presented. In case the work is determined to be associated with a live streaming scenario, a reservation entry associated with the live streaming event of the first user is presented in the viewing interface. In response to a selection of the reservation entry by the second user, reminder information about the live streaming event is sent to the second user at a time instance associated with the live streaming event. Therefore, the embodiments of the present disclosure may support automatically determining whether the work published by the streamer user (that is, the first user) is associated with the live streaming scenario, and automatically presenting the reservation entry associated with the live streaming of the streamer user when the association is determined. The reservation entry may send the reminder information of the live streaming to the audience user in response to receiving the selection operation of the audience user (i.e., the second user). In this way, the promotion effect of the live streaming by the streamer user may be improved, the viewing rate of the live streaming by the audience user may be improved, and the live streaming interaction experience of the streamer user and the audience user is improved.

Various example implementations of this solution are described in detail below in conjunction with the accompanying drawings. In order to explain the principles and concepts of the embodiments of the present disclosure, certain descriptions below will refer to the field of live streaming. It is to be understood, however, that this is merely illustrative and is not intended to limit the scope of the present disclosure in any way. The embodiments of the present disclosure can be applied to the fields of various content sharing, video watching, shopping and the like.

### EXAMPLE ENVIRONMENT

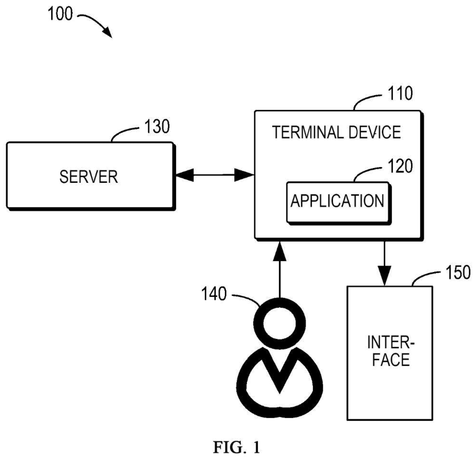

FIG. 1 illustrates a schematic diagram of an example environment 100 in which embodiments of the present disclosure can be implemented. In this example environment 100, an application 120 is installed in a terminal device 110. A user 140 may interact with the application 120 via the terminal device 110 and/or its attached devices. The application 120 may be a social application, a content sharing application, a shopping application, or any other suitable application.

In the environment 100 of FIG. 1, if the application 120 is in an active state, the terminal device 110 may present an interface 150 of the application 120. The interface 150 may include various interfaces that can be provided by the application 120, such as a live streaming interface of a live streaming room, a work viewing interface, and the like. For example, the application 120 may display live streaming interfaces of different live streaming rooms, and the audience user may interact with the streamer user through the interface. For another example, the application 120 may further display a viewing interface of a work published by a user. The user herein may be any user (for example, the user 140 or other users corresponding to the terminal device 110).

In some embodiments, the terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 can also support any type of interface for a user (such as a "wearable" circuit, etc.). The server 130 may be various types of computing systems/servers capable of providing computing power, including, but not limited to, mainframes, edge computing nodes, computing devices in a cloud environment, and the like.

It is to be understood that the structures and functions of the various elements in the environment 100 are described for illustrative purposes only and do not imply any limitation to the scope of the present disclosure.

Some example embodiments of the present disclosure will be described below with reference to the accompanying drawings.

### EXAMPLE PROCESSES

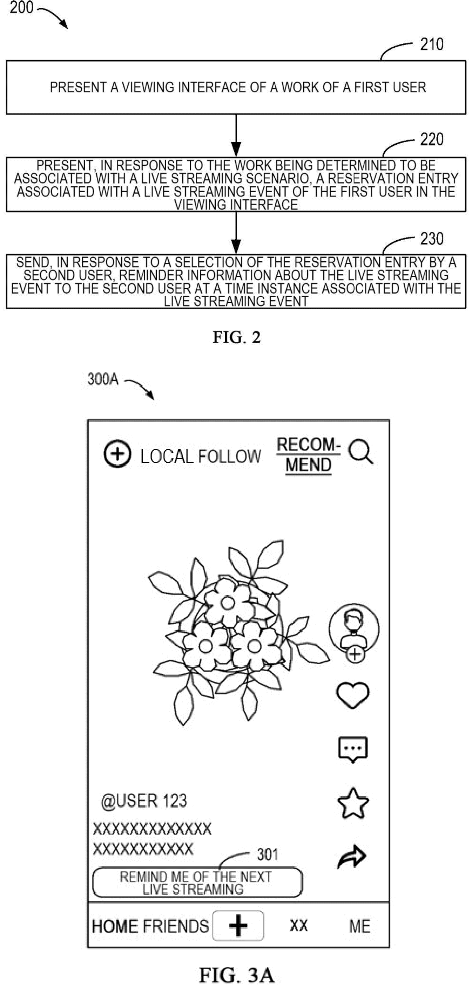

FIG. 2 illustrates a flowchart of a process 200 for live streaming reservation according to some embodiments of the present disclosure. The process 200 may be implemented at the terminal device 110. For ease of discussion, the process 200 will be described with reference to the environment 100 of FIG. 1.

At block 210, the terminal device 110 presents a viewing interface of a work of a first user. The first user herein may be, for example, a streamer user initiating a live streaming.

In some embodiments, when the application 120 is in a running state, the terminal device 110 may present the viewing interface of the work of the first user. The work here may be, for example, a work published by the first user to enable all users to view. The work may be a work that is self-created and published by the first user or may be a work forwarded by the first user. The work herein may be multimedia content in any appropriate format such as text, video, image, audio, or the like.

The user corresponding to the terminal device 110 may be any user. For example, it may be the first user or a second user other than the first user (the second user herein may be, for example, an audience user watching the live streaming). That is, regardless of who the user corresponding to the terminal device 110 is, the terminal device 110 may present the viewing interface of the work of the first user for the user.

In some embodiments, in response to the application 120 being in the running state, the terminal device 110 may present the playing interface 200A of the video content 210 by default. In some embodiments, when the application 120 is in the running state, the terminal device 110 may further present the viewing interface of the work of the first user when receiving a viewing request for the work of the first user. It is to be understood that the work of the first user and the viewing interface may be any suitable style, and the present disclosure is not intended to be limited to the specific style of the work and the viewing interface.

At block 220, in response to the work being determined to be associated with the live streaming scenario, the terminal device 110 presents a reservation entry associated with the live streaming event of the first user in the viewing interface. The live streaming event herein may be a live streaming event that the user has configured (that is, a live streaming event with a determined specific time of the live streaming), or may be a next live streaming event that is not configured by the user (that is, a live streaming event without a determined specific time of the live streaming).

In some embodiments, the presentation of the reservation entry may be independent of the configuration process of the first user. For example, when the first user configures the reservation entry in association with a particular work, it may be automatically determined that the specific work is associated with the live streaming scenario based on the process to be described below, and the reservation entry may be presented in association with the specific work accordingly.

After presenting the viewing interface of the work of the first user, the terminal device 110 may determine whether the work is associated with the live streaming scenario. The determination manner will be described in detail later and will not be repeated here.

In some embodiments, when the terminal device 110 determines that the work is associated with the live streaming scenario, the target container in the viewing interface may be used to provide the reservation entry associated with the live streaming event of the first user. The target container herein may be presented at any location of the viewing interface, such as the upper left corner, upper right corner, lower left corner, lower right corner, or the like of the viewing interface. In some embodiments, to reduce the impact of the presented target container on the work (e.g., reduce occlusion of the work by the target container), the reservation entry herein may be associated with, for example, an information description area of the work. In some embodiments, when the live streaming event is a live streaming event that has been configured by the user, the reservation entry may also present time information of the configured live streaming event.

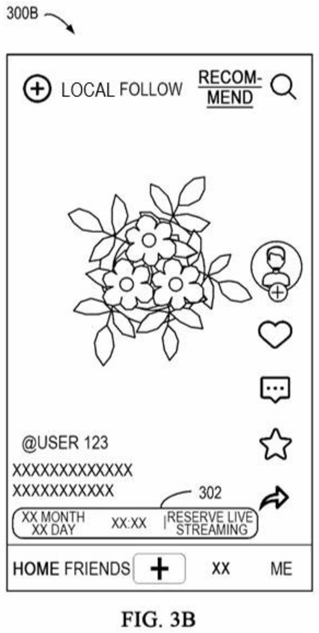

FIGS. 3A and 3B illustrate schematic diagrams of viewing interfaces according to some embodiments of the present disclosure. As shown in FIG. 3A and FIG. 3B, the terminal device 110 may use the target container 301 in the viewing interface 300A or use the target container 302 in the viewing interface 300B to provide a reservation entry associated with the live streaming event of the first user. The reservation entry herein may be, for example, the text "remind me of the next live streaming" or the text "XX Month XX Day XX: XX | reserve live streaming". The target container 301/target container 302 is associated with the information description area of the work (i.e., the region of FIG. 3A or 3B that presents "@ user 123 XXXXXXXXXXXXXXXXXXXXXXXXX"). Although the target container 301/the target container 302 in the figure is located below the text information in the information description area, it may be understood that it may also be located above the text information of the information description area, or in the middle of the text information of the information description area (for example, below the "@ user 123" and above "XXXXXXXXXXXXXXXXXXXXXXX"). The specific location of the target container is not limited in the present disclosure.

Reference is made back to FIG. 2. In some embodiments, in a case that it is determined that the work is not associated with the live streaming scenario, in order to avoid affecting the browsing experience of the user on the work, the terminal device 110 may hide the target container in the viewing interface. In this case, the information description area of the viewing interface will only present text information for describing the first user and/or work without presenting the target container.

At block 230, the terminal device 110 sends, in response to a selection of the reservation entry by the second user, reminder information about the live streaming event to the second user at a time instance associated with the live streaming event. The terminal device 110 may, for example, determine that the selection of the reservation entrance is received in response to detecting a selection operation on the reservation entry. The selection operation herein includes, but is not limited to, a click operation, a double-click operation, a long-press operation, a sliding operation, and the like.

In some embodiments, in response to the selection of the reservation entry by the second user, the terminal device 110 may stop presenting the reservation entry at the viewing interface or may switch the reservation entry to present the reservation information of the live streaming event. In some embodiments, the terminal device 110 may stop presenting the reservation entry on the viewing interface by hiding the target container.

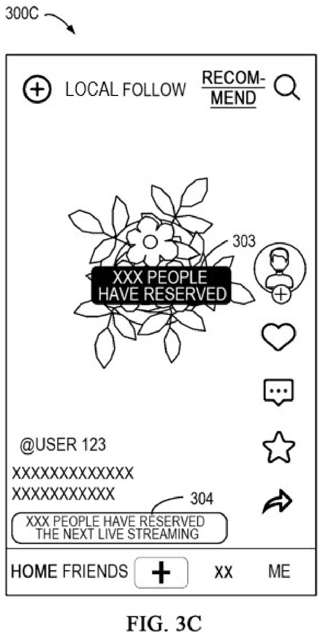

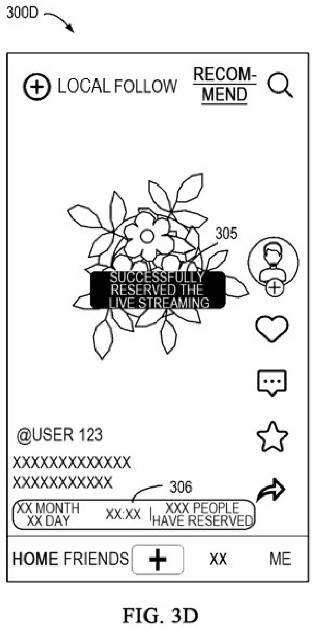

FIGS. 3C and 3D illustrate schematic diagrams of viewing interfaces according to some embodiments of the present disclosure. As shown in FIG. 3A and FIG. 3C, when the live streaming event is an unconfigured live streaming event, the terminal device 110 may switch from presenting the target container 301 to presenting the target container 304 in response to receiving the selection of the reservation entry. The target container 304 presents the reservation information of the live streaming event "XXX people have reserved the next live streaming".

As shown in FIG. 3B and FIG. 3D, when the live streaming event is a configured live streaming event, the terminal device 110 may switch from presenting the target container 302 to presenting the target container 306 in response to receiving the selection for the reservation entry. The target container 306 presents the reservation information of the live streaming event "XX Month XX Day XX: XX | XXX people have reserved".

In some embodiments, the terminal device 110 may further present a prompt message 303 of a successful reservation in the work display area of the viewing interface 300C, and/or present a prompt message 305 of the successful reservation in the work display area of the viewing interface 300D. The prompt message 303 and/or the prompt message 305 may be at least used to inform the second user that the live streaming reservation is successful. In some embodiments, they may also be used to inform the second user of the number of audience users who have currently reserved the live streaming.

Reference is made back to FIG. 2. In some embodiments, the terminal device 110 may further detect whether the current user corresponding to the terminal device 110 is the first user (that is, whether the current user is the streamer user who will conduct the live streaming). For example, whether the current user is the first user may be determined by detecting whether the account name of the current user login in the application 120 is the same as the user name of the first user presented in the work. For another example, whether the current user is the first user may be determined by detecting whether the work is a work published by the current user. The terminal device 110 may determine whether the current user is the first user in any suitable manner, which is not limited in the present disclosure.

When it is determined that the current user is not the first user, the terminal device 110 may determine that the current user is not the streamer user and thus may determine that the current user is the audience user that watches the live streaming (that is, the second user). Therefore, the terminal device 110 may send the reminder information about the live streaming event to the second user at the time instance associated with the live streaming event in response to the selection of the reservation entry by the second user only when the current user is the second user.

In some embodiments, when the live streaming event is a configured live streaming event, the terminal device 110 may determine the start time of the live streaming event. The terminal device 110 may send the reminder information about the live streaming event to the second user at the start time, or a time with a certain duration (for example, 5 minutes) from the start time. Such reminder information may be, for example, "The live streaming of user XX you previously reserved is about to start" or "The live streaming of user XX you previously reserved has started", etc.

In some embodiments, when the live streaming event is a live streaming event that has not been configured, the terminal device 110 may send, in response to the first user completing the configuration of the next live streaming event, the first reminder information about that the first user has configured the next live streaming event. Such first reminder information may be, for example, information such as "The live streaming of user XX you previously reserved will start on XX Month XX Day at XX: XX". Further, the terminal device 110 may further send second reminder information about the live streaming event to the second user at the start time, or at a time with a certain duration (for example, 5 minutes) from the start time. The second reminder information here is the same information as the reminder information for the configured live streaming event. For example, the second reminder information may also be, for example, "The live streaming of user XX you previously reserved is about to start" or "The live streaming of user XX you previously reserved has started", etc.

It is to be understood that the specific values mentioned in the above example scenarios and specific contents in the interface are merely illustrative and are not intended to constitute a limitation on the present disclosure.

Therefore, the embodiments of the present disclosure can support automatically determining whether the work published by the streamer user (that is, the first user) is associated with the live streaming scenario, and automatically presenting the reservation entry associated with the live streaming of the streamer user when the association is determined. The reservation entry may send the reminder information of the live streaming to the audience user in response to receiving the selection operation of the audience user (i.e., the second user). In this way, the promotion effect of the streamer user on the live streaming may be improved, the watching rate of the audience user on the live streaming may be improved, and the live streaming interaction experience of the streamer user and the audience user may be improved.

### DETERMINATION OF LIVE STREAMING SCENARIOS

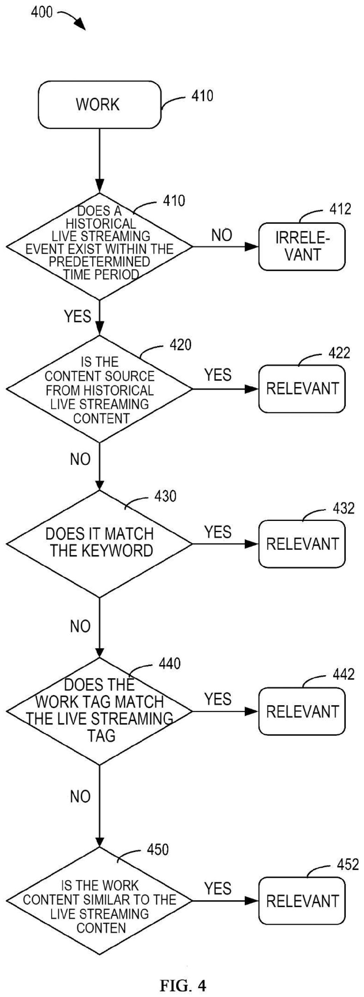

The interaction of the user and the different content presented by the terminal device 110 are described above with reference to FIG. 2 to FIG. 3D, and the manner of determining whether the work is associated with the live streaming scenario is described below with reference to FIG. 4. In some embodiments, the terminal device 110 may directly analyze the work to determine whether it is associated with a live streaming scenario. In some embodiments, the terminal device 110 may further upload the work to the server 130 to analyze the work by the server 130. The server 130 may send a determination result associated with whether the work is associated with the live streaming scenario to the terminal device 110, so that the terminal device 110 determines whether the work is associated with the live streaming scenario. For convenience of description, the following uses a target device to refer to an electronic device that analyzes a work to determine whether it is associated with a live streaming scenario. The target device may include any suitable electronic device, such as the terminal device 110, the server 130, and/or a combination thereof as discussed with reference to FIG. 1.

FIG. 4 illustrates a schematic diagram of a process 400 for determining whether a work is associated with a live streaming scenario according to some embodiments of the present disclosure. Process 400 may be implemented at the target device.

In some embodiments, after obtaining the work 401, the target device may obtain the latest live streaming record of the first user. The service system herein is a service system associated with the application 120, and the live streaming record of the service system includes records of all live streaming in the application 120.

At block 410, the target device may determine whether a historical live streaming event associated with the first user exists within a predetermined time period based on a query result in the business system. Here, the historical live streaming event should be a live streaming event whose duration is greater than a predetermined duration. The predetermined time period may be any duration, such as 30 minutes, 1 hour, 2 hours, etc. The predetermined duration may be, for example, a preconfigured duration. The predetermined duration may also be, for example, a duration determined by the target device based on the historical live streaming event in the service system. The target device may filter out, by querying only historical live streaming events whose live streaming duration is greater than the predetermined duration, those live streaming events that are generated due to, for example, the first user's mis operation. For example, the target device may query only historical live streaming events associated with the first user that have a duration of more than 30 minutes.

The predetermined period may be any period, such as 1 month, 1 quarter, 15 days, etc. The predetermined period may be, for example, a preconfigured period. The predetermined period may also be, for example, a period determined by the target device based on a historical live streaming event in the service system. For example, the target device 110 may query only whether there is a historical live streaming event associated with the first user within a month.

When it is determined that there is no historical live streaming event, at block 412, the target device determines that the work is not related to the live streaming scenario. When it is determined that the historical live streaming event exists, in response to the historical live streaming event associated with the first user existing within the predetermined period, the target device may further determine, based on the work information of the work, whether the work is associated with the live streaming scenario. In some embodiments, the work information may include description information corresponding to attributes such as a title, a tag, a category, and a source of the work.

In some embodiments, the target device may query whether the work is live streaming replay (which may be a complete replay of the live streaming or may be replay of some content in the live streaming). The service system submission information may, for example, record related information of each piece of work. Such relevant information may indicate the source of the work. That is, the target device may determine the content source of the work by querying the work ID in the service system submission information.

In some embodiments, the target device may also directly compare the work content with the historical live streaming content to determine whether the work is live streaming replay. Taking the work as a video as an example, the target device may obtain a plurality of video frames of the work and a plurality of video frames in the historical live streaming content, and the target device may further determine that the work is a live streaming replay in response to the plurality of video frames in the historical live streaming content including the plurality of video frames of the work.

At block 420, the target device determines whether the content source of the work is the historical live content of the first user. Specifically, the target device may determine whether the content source is the historical live content of the first user based on a determination result of whether the work is live replay. At block 422, in response to the content source being the historical live content of the first user, the target device may determine that the work is associated with the live streaming scenario.

In response to the content source not being the historical live streaming content of the first user, the target device may determine, in other manners, whether the work is associated with the live streaming scenario.

In some embodiments, the target device may further determine, based on the content information of the work, that the work is associated with the live streaming scenario. The content information of the work may correspond to content of the work, e.g., text content, audio content, and/or image content, etc.

In some embodiments, the target device may directly obtain description text of the work (e.g., text content in the work description information, work title, etc.) as text content associated with the work. In some embodiments, the target device may determine text content associated with the work by analyzing image content and/or audio content of the work. Specifically, the target device may extract the text content associated with the work from the image content and/or the audio content of the work by using an appropriate text processing technology. The target device may match the text content with a predetermined keyword to obtain a matching result. For example, the target device may match the obtained text content with a predetermined keyword to obtain a matching result. The keyword here may be, for example, a keyword associated with the live streaming, for example, "live streaming room", "live streaming", "live streaming preview", or the like. The target device may obtain and store the group of keywords in advance. The group of keywords may be stored in the target device in the form of a keyword table, for example.

At block 430, the target device may determine, based on the matching result between the text content and the predetermined keyword, whether the text content matches the predetermined keyword. At block 432, in response to the text content matching the predetermined keyword, the target device may determine that the work is associated with the live streaming scenario.

In response to the text content not matching the predetermined keyword, the target device may determine, in other manners, whether the work is associated with the live streaming scenario. For example, the target device may obtain first description information of a configured live streaming event of the first user. The "configured live streaming event" may include a future live streaming event that the first user has added, the time, subject, etc. of which has been configured by the first user, for example. The first description information herein may be, for example, the start time of the configured live streaming event, a live streaming theme of the configured live streaming event (for example, product promotion, dancing, gaming, chatting, etc.), the streamer member of the configured live streaming event, and the like. Such first description information may also be referred to as a live streaming tag. For example, the target device may query the configured live streaming tag of the live streaming event. The target device may further obtain second description information of the work. The second description information may include, for example, text description information of the work, text content extracted from the work in any appropriate manner, and the like. The second description information may also be referred to as a work tag. The target device may determine, based on a predetermined mapping relationship, whether the work label matches the live streaming tag.

At block 440, the target device may determine, based on a matching result between the work tag and the live streaming tag, whether the second description information matches the first description information. At block 442, in response to the first description information matching the second description information, the target device determines that the work is associated with the live streaming scenario.

In response to the first description information not matching the second description information, the target device may determine, in other manners, whether the work is associated with the live streaming scenario. The target device may, for example, obtain historical content associated with the historical live streaming event of the first user. The historical content may include, for example, images and/or videos that have appeared in the live streaming room in the historical live streaming event. For example, the target device may divide the historical content into a plurality of segments. The target device may in turn determine a plurality of similarities between the plurality of segments and the work content. Specifically, the target device may generate, based on the segment content of the plurality of segments, a plurality of first vector representations (which may also be referred to as live streaming room features) corresponding to the plurality of segments. The target device may further generate a second feature representation (also referred to as a work feature) corresponding to the work content based on the image, the title, and the text content of the work. The target device may determine a plurality of similarities between the plurality of segments and the work content based on the plurality of first vector representations and the second feature representation of the work content.

At block 450, the target device may determine whether the work content is similar to the live streaming content based on a comparison between the historical content and the work content of the work and a threshold. At block 452, in response to the similarity between the historical content and the work content of the work being greater than the threshold, the target device determines that the work content is similar to the live streaming content and further determines that the work is associated with the live streaming scenario.

In response to the similarity between the historical content and the work content of the work reaching the threshold, the target device may determine whether the work is associated with the live streaming scenario in other manners. The target device may also determine whether the same object is included in the work, for example, based on historical image content associated with the historical live streaming event of the first user. In some embodiments, the target device may determine whether the work content is related to the live streaming scenario based on a different order than shown in FIG. 4. For example, the target device may perform a determination of multiple conditions (e.g., different conditions discussed with reference to block 420, block 430, block 440, and/or block 450) in parallel and determine that the work content is related to the live streaming scenario if either condition is satisfied. That is, the execution of block 420, block 430, block 440, and/or block 450 in FIG. 4 is not necessarily dependent on the specific preceding processes shown in FIG. 4.

Therefore, the target device may determine whether the work is associated with the live streaming scenario through a plurality of rounds and a plurality of dimensions. The target device may send the determining result to the terminal device 110, so that the terminal device 110 obtains the determining result and presents the reservation entry when the work is determined to be associated with the live streaming scenario. In this way, it may be automatically determined whether to present the reservation entry, the presentation efficiency of the reservation entry may be improved, and the promotion efficiency of the live streaming may be improved.

### EXAMPLE APPARATUS AND APPARATUS

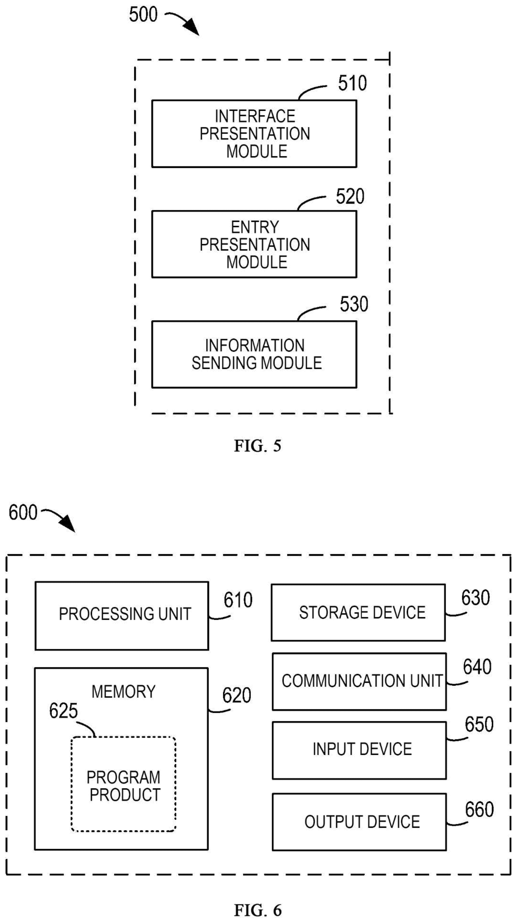

Embodiments of the present disclosure also provide a corresponding apparatus for implementing the above method or process. FIG. 5 shows a schematic structural block diagram of an apparatus 500 for live streaming reservation according to some embodiments of the present disclosure. The apparatus 500 may be implemented or included in the terminal device 110. The various modules/components in the apparatus 500 may be implemented by hardware, software, firmware, or any combination thereof.

As shown in FIG. 5, the apparatus 500 includes an interface presentation module 510 configured to present a viewing interface of a work of a first user. The apparatus 500 further includes an entry presentation module 520 configured to present, in response to the work being determined to be associated with a live streaming scenario, a reservation entry associated with a live streaming event of the first user in the viewing interface. The apparatus 500 further includes an information sending module 530 configured to, send, in response to a selection of the reservation entry by a second user, reminder information about the live streaming event to the second user at a time instance associated with the live streaming event.

In some embodiments, the live streaming event includes a configured live streaming event of the first user.

In some embodiments, the reservation entry presents time information of the configured live streaming event.

In some embodiments, the live streaming event includes a next live streaming event of the first user, and the next live streaming event has not been configured.

In some embodiments, the information sending module 530 includes: a first information sending module, configured to send, in response to the first user completing a configuration of the next live streaming event, to the second user first reminder information that the first user has configured the next live streaming event.

In some embodiments, the time instance is determined based on a start time of the live streaming event.

In some embodiments, the reservation entry is provided by using a target container in the viewing interface, and the target container is associated with an information description area of the work.

In some embodiments, the apparatus 500 further includes a scenario determination module configured to determine, by the target device and based on content information of the work, that the work is associated with the live streaming scenario.

In some embodiments, the scenario determination module is further configured to: determine, by the target device and based on the work information of the work, that the work is associated with the live streaming scenario in response to a historical live streaming event associated with the first user existing within a predetermined time period, a duration of the historical live streaming event being greater than a predetermined duration.

In some embodiments, the scenario determination module is further configured to: determine, by the target device, a content source of the work; and determine, in response to the content source being historical live streaming content of the first user, that the work is associated with the live streaming scenario.

In some embodiments, the scenario determination module is further configured to: obtain, by the target device, text content associated with the work; and determine that the work is associated with the live streaming scenario in response to the text content matching a predetermined keyword.

In some embodiments, the scenario determination module is further configured to: obtain, by the target device, description text of the work as the text content associated with the work; and determine, by the target device, the text content associated with the work by analyzing image content and/or audio content of the work.

In some embodiments, the scenario determination module is further configured to: obtain, by the target device, first description information of a configured live streaming event of the first user; and determine that the work is associated with the live streaming scenario in response to the first description information matching second description information of the work.

In some embodiments, the scenario determination module is further configured to: obtain, by the target device, historical content associated with a historical live streaming event of the first user; determine a similarity between the historical content and work content of the work; and determine that the work is associated with the live streaming scenario in response to the similarity being greater than a threshold.

In some embodiments, the scenario determination module is further configured to: divide the historical content into a plurality of segments; and determine a plurality of similarities between the plurality of segments and the work content.

In some embodiments, the scenario determination module is further configured to: generate a plurality of first vector representations corresponding to the plurality of segments based on segment content of the plurality of segments; and determine the plurality of similarities between the plurality of segments and the work content based on the plurality of first vector representations and a second feature representation of the work content.

In some embodiments, the scenario determination module is further configured to: determine, by the target device, a target object based on historical image content associated with a historical live streaming event of the first user; and determine that the work is associated with the live streaming scenario in response to determining that work image content of the work is associated with the target object.

In some embodiments, the target object includes a face object.

In some embodiments, the apparatus 500 further includes: a selection executing module configured to, in response to the selection of the reservation entry by the second user: stop presenting the reservation entry in the viewing interface; or switch the reservation entry to display reservation information of the live streaming event.

The units and/or modules included in the apparatus 500 may be implemented in various manners, including software, hardware, firmware, or any combination thereof. In some embodiments, one or more units and/or modules may be implemented using software and/or firmware, such as machine-executable instructions stored on a storage medium. In addition to or as an alternative to machine-executable instructions, some or all the units and/or modules in the apparatus 500 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

It is to be understood that one or more of the above methods may be performed by a suitable electronic device or a combination of electronic devices. Such electronic devices or a combination of electronic devices may include, for example, terminal device 110 and/or server 120 in FIG. 1.

FIG. 6 illustrates a block diagram of an electronic device 600 in which one or more embodiments of the present disclosure may be implemented. It is to be understood that the electronic device 600 illustrated in FIG. 6 is merely illustrative and should not constitute any limitation on the functionality and scope of the embodiments described herein. The electronic device 600 shown in FIG. 6 may be configured to implement the terminal device 110 and/or the server 130 in FIG. 1.

As shown in FIG. 6, the electronic device 600 is in the form of a general-purpose electronic device. Components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and capable of performing various processes according to programs stored in the memory 620. In multiprocessor systems, multiple processing units execute computer-executable instructions in parallel to improve parallel processing capabilities of electronic device 600.

Electronic device 600 typically includes a plurality of computer storage media. Such media may be any available media accessible to the electronic device 600, including, but not limited to, volatile and non-volatile media, removable and non-removable media. The memory 620 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 630 may be a removable or non-removable medium and may include a machine-readable medium, such as a flash drive, magnetic disk, or any other medium, which may be capable of storing information and/or data and may be accessed within electronic device 600.

The electronic device 600 may further include additional removable/non-removable, volatile/non-volatile storage media. Although not shown in FIG. 6, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 620 may include a computer program product 625 having one or more program modules configured to perform various methods or actions of various embodiments of the present disclosure.

The communication unit 640 is configured to communicate with another electronic device through a communication medium. Additionally, the functionality of components of the electronic device 600 may be implemented in a single computing cluster or multiple computing machines capable of communicating over a communication connection. Thus, the electronic device 600 may operate in a networked environment using logical connections with one or more other servers, network personal computers (PCs), or another network node.

The input device 650 may be one or more input devices, such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, external devices such as storage devices, display devices, etc. , communicate with one or more devices that enable a user to interact with the electronic device 600, or communicate with any device (e.g., a network card, a modem, etc. ) that enables the electronic device 600 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It is to be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for live streaming reservation, comprising:
presenting a viewing interface of a work of a first user;
presenting, in response to the work being determined to be associated with a live streaming scenario, a reservation entry associated with a live streaming event of the first user in the viewing interface; and
sending, in response to a selection of the reservation entry by a second user, reminder information about the live streaming event to the second user at a time instance associated with the live streaming event.

2. The method of claim 1, wherein the live streaming event comprises a configured live streaming event of the first user.

3. The method of claim 2, wherein the reservation entry presents time information of the configured live streaming event.

4. The method of claim 1, wherein the live streaming event comprises a next live streaming event of the first user, and the next live streaming event has not been configured.

5. The method of claim 4, wherein sending the reminder information about the live streaming event to the second user at the time instance associated with the live streaming event comprises:
sending, in response to the first user completing a configuration of the next live streaming event, to the second user first reminder information that the first user has configured the next live streaming event.

6. The method of claim 1, wherein the time instance is determined based on a start time of the live streaming event.

7. The method of claim 1, wherein the reservation entry is provided by using a target container in the viewing interface, and the target container is associated with an information description area of the work.

8. The method of claim 1, wherein the work is determined to be associated with the live streaming scenario by a target device based on the following process:
determining, by the target device and based on content information of the work, that the work is associated with the live streaming scenario.

9. The method of claim 8, wherein determining by the target device and based on work information of the work whether the work is associated with the live streaming scenario comprises:
determining, by the target device and based on the work information of the work, that the work is associated with the live streaming scenario in response to a historical live streaming event associated with the first user existing within a predetermined time period, a duration of the historical live streaming event being greater than a predetermined duration.

10. The method of claim 8, wherein determining by the target device and based on work information of the work whether the work is associated with the live streaming scenario comprises:
determining, by the target device, a content source of the work; and
determining, in response to the content source being historical live streaming content of the first user, that the work is associated with the live streaming scenario.

11. The method of claim 8, wherein determining by the target device and based on the content information of the work whether the work is associated with the live streaming scenario comprises:
obtaining, by the target device, text content associated with the work; and
determining that the work is associated with the live streaming scenario in response to the text content matching a predetermined keyword.

12. The method of claim 11, wherein obtaining by the target device the text content associated with the work comprises:
obtaining, by the target device, description text of the work as the text content associated with the work; and
determining, by the target device, the text content associated with the work by analyzing image content and/or audio content of the work.

13. The method of claim 8, wherein determining by the target device and based on the content information of the work whether the work is associated with the live streaming scenario comprises:
obtaining, by the target device, first description information of a configured live streaming event of the first user; and
determining that the work is associated with the live streaming scenario in response to the first description information matching second description information of the work.

14. The method of claim 8, wherein determining by the target device and based on the content information of the work whether the work is associated with the live streaming scenario comprises:
obtaining, by the target device, historical content associated with a historical live streaming event of the first user;
determining a similarity between the historical content and work content of the work; and
determining that the work is associated with the live streaming scenario in response to the similarity being greater than a threshold.

15. The method of claim 14, wherein determining the similarity between the historical content and the work content of the work comprises:
dividing the historical content into a plurality of segments; and
determining a plurality of similarities between the plurality of segments and the work content.

16. The method of claim 15, wherein determining the plurality of similarities between the plurality of segments and the work content comprises:
generating a plurality of first vector representations corresponding to the plurality of segments based on segment content of the plurality of segments; and
determining the plurality of similarities between the plurality of segments and the work content based on the plurality of first vector representations and a second feature representation of the work content.

17. The method of claim 8, wherein determining by the target device and based on the content information of the work whether the work is associated with the live streaming scenario comprises:
determining, by the target device, a target object based on historical image content associated with a historical live streaming event of the first user; and
determining that the work is associated with the live streaming scenario in response to determining that work image content of the work is associated with the target object.

18. The method of claim 1, wherein presentation of the reservation entry is independent of a configuration process of the first user.

19. The method of claim 1, further comprising, in response to the selection of the reservation entry by the second user:
stopping presenting the reservation entry in the viewing interface; or
switching the reservation entry to display reservation information of the live streaming event.

20. An apparatus for live streaming reservation, comprising:
an interface presentation module configured to present a viewing interface of a work of a first user;
an entry presentation module configured to present, in response to the work being determined to be associated with a live streaming scenario, a reservation entry associated with a live streaming event of the first user in the viewing interface; and
an information sending module configured to, send, in response to a selection of the reservation entry by a second user, reminder information about the live streaming event to the second user at a time instance associated with the live streaming event.

21. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 19.

22. A computer-readable storage medium having a computer program stored thereon, the computer program, when executed by a processor, implementing the method of any of claims 1 to 19.
